Europäisches Patentamt

European Patent Office

Office européen des brevets

(19)

(11) Numéro de publication : **0 459 872 A1**

## (12) DEMANDE DE BREVET EUROPEEN

(21) Numéro de dépôt : 91401321.4

(22) Date de dépôt : 22.05.91

(51) Int. Cl.⁵ : **F16F 1/14, B60G 11/18**

(30) Priorité : 28.05.90 FR 9006581

(43) Date de publication de la demande :
04.12.91 Bulletin 91/49

(84) Etats contractants désignés :
AT BE CH DE DK ES FR GB GR IT LI LU NL SE

(71) Demandeur : ASCOMETAL
Immeuble Elysées-La Défense 29, Le Parvis
Cédex 34
F-92072 PARIS-LA DEFENSE 4 (FR)

(72) Inventeur : Genouille, Michel
6, rue de l'abreuvoir
F-91370 Verrieres le Buisson (FR)

(74) Mandataire : Tilliet, René Raymond Claude et
al
Cabinet Lavoix 2, Place d'Estienne d'Orves
F-75441 Paris Cédex 09 (FR)

(54) **Elément de suspension, notamment pour véhicule automobile, formé avec une barre de torsion et de flexion à inertie variable.**

(57) Cet élément de suspension formé avec une barre de torsion et de flexion est caractérisé en ce que la barre de torsion et de flexion à inertie variable a ses sections droites présentant par rapport à deux axes orthogonaux situés dans le plan des sections, des inerties de flexion différentes, le comportement en flexion étant conditionné par l'état de déformation en torsion.

Selon un mode de réalisation, cet élément de suspension est composé d'une barre enroulée sur un cylindre pour former un ressort hélicoïdal.

FIG.2

EP 0 459 872 A1

La présente invention concerne un élément de suspension notamment pour véhicule automobile formé avec une barre de torsion et de flexion.

On connaît déjà dans l'état de la technique un certain nombre de barres de torsion dans le domaine de l'industrie automobile.

En effet, la fonction élastique d'une suspension classique de véhicule automobile, est assurée par un ressort qui est soit un ressort à lame, soit un ressort hélicoïdal ou par une barre de torsion.

Celle-ci est généralement constituée par une pièce cylindrique à laquelle le couple de torsion est appliqué grâce à des extrémités cannelées.

Le ressort hélicoïdal permet d'obtenir une raideur variable lorsque le diamètre d'enroulement et/ou le diamètre du fil du ressort n'est pas constant.

Les exigences modernes de confort, alliées aux impératifs de sécurité, conduisent à préférer des suspensions offrant une raideur relativement faible pour de faibles sollicitations et une raideur relativement élevée pour des sollicitations plus importantes.

Or, dans leur conception actuelle, les barres de torsion offrent une raideur qui est obtenue par une géométrie définie, c'est-à-dire leur longueur et leur diamètre, et cette raideur est nécessairement constante, du fait que la géométrie offre une dominante aux caractéristiques de torsion pure, les effets de flexion étant faibles et négligeables.

Le but de l'invention est donc de résoudre ces problèmes en proposant un élément de suspension dont la raideur est variable.

A cet effet, l'invention a pour objet un élément de suspension notamment pour véhicule automobile formé avec une barre de torsion et de flexion, caractérisé en ce que la barre de torsion et de flexion à inertie variable a ses sections droites présentant par rapport à deux axes orthogonaux situés dans le plan des sections, des inerties de flexion différentes, le comportement en flexion étant conditionné par l'état de déformation en torsion.

Avantageusement, cette barre de torsion et de flexion est initiallement vrillée.

Selon différents modes de réalisation, cette barre de torsion et de flexion peut présenter par exemple une section elliptique ou encore une section cylindrique avec au moins une aile longitudinale.

Selon une autre caractéristique de l'invention, l'élément de suspension est composé d'au moins une barre longilique.

Selon encore une autre caractéristique de l'invention, l'élément de suspension est composé d'une barre enroulée sur un cylindre pour former un ressort hélicoïdal.

L'invention sera mieux comprise à l'aide de la description qui va suivre, donnée uniquement à titre d'exemple et faite en se référant aux dessins annexés, sur lesquels :

- la figure 1 représente un premier mode de réalisation d'un élément de suspension selon l'invention;

- la figure 2 représente un seond mode de réalisation d'un élément de suspension ; et

- la figure 3 représente une barre de torsion et de flexion déformée sous un effort.

Ainsi qu'on l'a mentionné précédemment, pour conférer à la barre de torsion et de flexion, une raideur relativement faible, pour de faibles sollicitations et une raideur relativement élevée pour des sollications plus importantes, on réalise une barre de torsion et de flexion dont les sections droites présentent, par rapport à deux axes orthogonaux situés dans le plan des sections, des inerties de flexion différentes, le comportement en flexion étant conditionné par l'état de déformation en torsion.

Une telle barre de torsion et de flexion peut donc être utilisée notamment dans des suspensions de véhicules automobile.

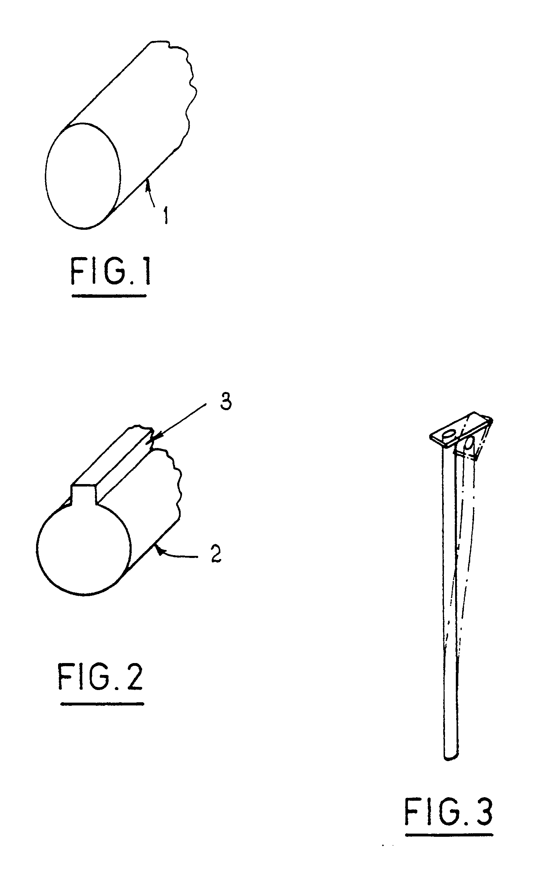

Ainsi, contrairement à la solution classique de la barre de torsion qui offre une raideur qui n'est définie que par sa géométrie initiale et qui est donc constante, la raideur de la barre de torsion et de flexion selon l'invention, est définie par la géométrie déformée de celle-ci (figure 3).

Dans un tel montage, sous l'effet simultané des déformations de torsion et de flexion, la variation des inerties de flexion induite par la rotation de sections successives due à la torsion, de cette barre, conduit à une raideur variable.

A titre d'exemple, on pourra se référer aux figures 1 et 2 qui représentent respectivement une barre de torsion 1 présentant une section elliptique (figure 1) et une autre, 2, présentant une section cylindrique avec au moins une aile longitudinale 3 (figure 2).

Dans ces modes de réalisation, la barre de torsion et de flexion est caractérisée en ce que ses sections droites présentent, par rapport à deux axes orthogonaux situés dans le plan des sections, des inerties de flexion différentes, le comportement en flexion étant conditionné par l'état de déformation en torsion.

Ainsi, lorsque cette barre est sollicitée en torsion pure, l'angle de torsion est régulièrement réparti le long de la barre si l'inertie de torsion est constante, de sorte que chaque section de cette barre tourne d'un angle différent par rapport à l'extrémité immobile de cette barre. Par rapport à deux axes orthogonaux liés à la section d'extrémité immobile, chaque section déformée présente donc des inerties de flexion fonction de l'angle de rotation de la section.

Dans ces conditions, si la barre de torsion et de flexion est montée de telle sorte qu'elle soit sollicitée à la fois en torsion et en flexion, elle offre une raideur variable, puisque celle-ci est fonction de la déformation.

Avantageusement, pour obtenir une raideur initiale faible et une raideur finale élevée, la barre selon l'invention peut éventuellement être initialement vrillée, de telle sorte que, dans la configuration de déformation maximale, chaque section de celle-ci présente une inertie de flexion maximale vis-à-vis du plan de flexion final.

L'invention permet donc de réaliser des éléments de suspension formés avec une barre de torsion et de flexion à inertie variable du type décrit.

Un tel élément de suspension peut être composé d'au moins une barre longilique ou d'une barre enroulée sur un cylindre pour former un ressort hélicoïdal.

On conçoit donc que l'élément de suspension selon l'invention présente un certain nombre d'avantages par rapport aux barres de l'état de la technique.

En effet, l'évolution des profils d'inertie étant à priori quelconque, il est possible d'engendrer des courbes de raideur également quelconques, voire non monotones, c'est-à-dire des raideurs croissantes et décroissantes ou présentant des paliers successifs, la seule limitation d'un tel concept étant l'amplitude maximale admissible de la déformation et par conséquent des contraintes.

Dans le cas d'un profil à sections successives superposables, il est possible d'envisager une fabrication économique directement par filage.

Par ailleurs, cette barre est également très simple à monter, sans choc, non bruyante et d'un encombrement faible.

**Revendications**

1. Elément de suspension notamment pour véhicule automobile formé avec une barre de torsion et de flexion, caractérisé en ce que la barre de torsion et de flexion à inertie variable a ses sections droites présentant par rapport à deux axes orthogonaux situés dans le plan des sections, des inerties de flexion différentes, le comportement en flexion étant conditionné par l'état de déformation en torsion.

2. Elément de suspension selon la revendication 1, caractérisé en ce que la barre de torsion et de flexion est initialement vrillée.

3. Elément de suspension selon la revendication 1, caractérisé en ce que la barre de torsion et de flexion présente une section elliptique (1).

4. Elément de suspension selon la revendication 1, caractérisé en ce que la barre de torsion et de flexion présente une section cylindrique (2) avec au moins une aile longitudinale (3).

5. Elément de suspension selon l'une quelconque des revendications 1 à 4, caractérisé en ce qu'il est composé d'au moins une barre longilique.

6. Elément de suspension selon l'une quelconque des revendications 1 à 4, caractérisé en ce qu'il est composé d'une barre enroulée sur un cylindre pour former un ressort hélicoïdal.

FIG.1

FIG.2

FIG.3

Office européen
des brevets

# RAPPORT DE RECHERCHE EUROPEENNE

Numero de la demande

EP    91 40 1321

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| X | DE-U-1843455 (AUTO UNION GMBH)<br>* le document en entier * | 1-3, 5 | F16F1/14<br>B60G11/18 |
| Y | | 2, 4, 6 | |
| | --- | | |
| Y | US-A-2238380 (J.O.ALMEN)<br>* revendication 1 * | 2 | |
| | --- | | |
| Y | FR-A-1041607 (P.-L.-M. JAFFIER)<br>* figure 7 * | 4 | |
| | --- | | |
| Y | FR-A-1162187 (SIEMENS-SCHUCKERTWERKE AG)<br>* abrégé * | 6 | |
| | ------ | | |

**DOMAINES TECHNIQUES RECHERCHES (Int. Cl.5 )**

F16F
B60G

Le présent rapport a été établi pour toutes les revendications

| Lieu de la recherche | Date d'achèvement de la recherche | Examinateur |
|---|---|---|
| LA HAYE | 30 AOUT 1991 | PEMBERTON P. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

............................................................
& : membre de la même famille, document correspondant

EPO FORM 1503 03.82 (P0402)